(19) Europäisches Patentamt
European Patent Office
Office européen des brevets

(11) Publication number: **0 044 816**
**B1**

(12) **EUROPEAN PATENT SPECIFICATION**

(45) Date of publication of patent specification: **23.10.85**

(51) Int. Cl.$^4$: **C 08 G 59/18,** C 08 G 59/50

(21) Application number: **81810298.0**

(22) Date of filing: **21.07.81**

(54) **Adducts from amines and di- and polyepoxides.**

(30) Priority: **23.07.80 US 171520**

(43) Date of publication of application:
**27.01.82 Bulletin 82/04**

(45) Publication of the grant of the patent:
**23.10.85 Bulletin 85/43**

(84) Designated Contracting States:
**DE FR GB**

(56) References cited:
**US-A-3 538 184**
**US-A-3 673 558**

(73) Proprietor: **CIBA-GEIGY AG**
**Postfach**
**CH-4002 Basel (CH)**

(72) Inventor: **DiBenedetto, Marianne**
**2 Woodland Drive**
**Pleasantville New York 10570 (US)**
Inventor: **Gannon, John A.**
**7 Elmcrest Drive**
**Danbury Connecticut 06810 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 816 B1

**Description**

Adducts from amines and mono- and diepoxides have long been used in industry as curing agents for epoxy resins. The advantages of the formation of such adducts include lower volatility, lower irritation potential, reduced tendency to blush and exude, and the like. Such adducts and the advantages thereof are discussed in Lee and Neville, Handbook of Epoxy Resins, McGraw Hill (1967). It is to be noted, however, that these adducts do not exhibit significant improvement in chemical resistance over that of their free amine counterparts.

More specifically, such adducts have been prepared from diethylenetriamine with diglycidylethers of bisphenol A of varying molecular weight. These epoxy resins have all exhibited a functionality of not more than two and have exhibited various improved performance characteristics. As previously noted, however, they have been deficient in the important characteristic of resistance to chemical attack, and primarily to solvent attack.

Additionally, US patent 3,538,184 discloses solvent-free liquid adducts based on polyglycidyl ethers of a polyphenol or polyalcohol and on alkylsubstituted hexamethylene diamines. As suitable polyglycidyl ethers there are also mentioned phenol-formaldehyde condensates of the resole or novolac type. While such adducts exhibit improved handling and mechanical properties, these adducts are not sufficient in any case with respect to the resistance to chemical attack.

It has now been surprisingly discovered that the preparation of amine adduct curing agents utilizing as epoxides a polyglycidyl ether of cresol novolac or the triglycidylated p-aminophenol significantly enhances the chemical resistance properties of the cured epoxy products, particularly with regard to solvent resistance, over results obtained from either free amines or the conventional amine adducts. The improved performance characteristics are believed to result from the extremely dense cross-link network obtained with the use of such polyepoxides. Thus, when the liquid amine adducts are utilized as curing agents with a wide variety of epoxy resins, the resulting cured products exhibit excellent resistance to attack by a wide variety of solvents, thereby assuring the applicability of these cures systems as, for example, protective coatings.

Therefore, the present invention relates to a curing agent for epoxy resins comprising the adduct, free of epoxy groups, obtained from the reaction of

(a) an amine,

(b) a polyepoxide resin having a functionality greater than two and being either (i) a polyepoxide corresponding to the formula

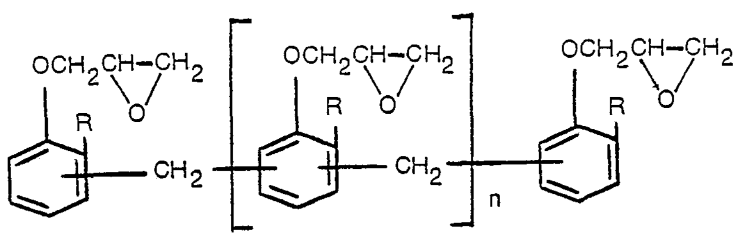

wherein R is $CH_3$ and n is 0.2—3.4, or

(ii) triglycidyl-p-aminophenol

and, optionally, an accelerator for said curing operation and a solvent for said curing agent, said amine being present in weight equivalent excess relative to said polyepoxide resin.

As suitable amines (component a), there may be mentioned aliphatic, cycloaliphatic or aromatic primary and secondary amines, with the aliphatic and cycloaliphatic amines being prefered. Typical amines include monoethanolamine, ethylenediamine, hexamethylenediamine, trimethylhexamethylenediamine, diethylenetriamine, triethylenetetramine, tetraethylenepentamine, N,N-dimethylpropylenediamine-1,3, N,N-diethylpropylenediamine-1,3; bis(4-amino-3-methylcyclohexyl)methane, bis(p-aminocyclohexyl)methane, 2,2-bis(4-aminocyclohexyl)propane, 3,5,5-trimethyl-s-(aminomethyl)-cyclohexylamine, N-aminoethylpiperazine, m-phenylenediamine, p-phenylenediamine, bis(p-aminophenyl)methane, bis(p-aminophenyl)-sulfone, m-xylylenediamine, 1,2-diaminocyclohexane, 1,4-diaminocyclohexane, 1,3-bis(aminomethyl)cyclohexane, 1,4-bis(aminomethyl)cyclohexane and isophorone diamine.

Preferred amines include diethylenetriamine, triethylenetetramine, tetraethylenepentamine, 1,2-diaminocyclohexane, bis(p-aminocyclohexyl)methane, m-xylylenediamine, isophorone diamine, 1,4-bis(aminomethyl)cyclohexane, N-aminoethyl-piperazine, 1,3-bis(aminomethyl)cyclohexane and bis(p-aminophenyl)methane.

The polyglycidyl compounds (i) and (ii) of component (b) are well known.

Although components (i) and (ii) may be utilized as the sole polyepoxide reactant, they may also be blended with a diclycidyl ether of bisphenol A (c) corresponding to the formula

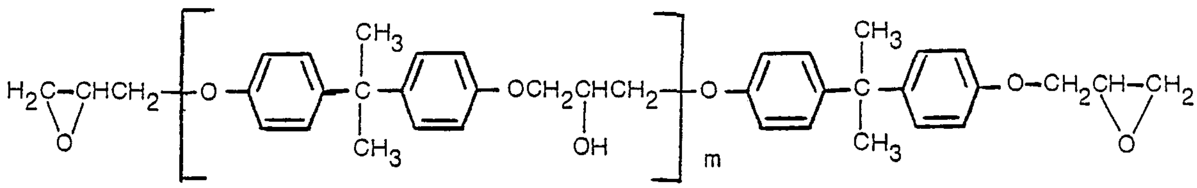

wherein m is 0—2.2, a diglycidyl ether of hydrogenated bisphenol A (d) corresponding to the formula

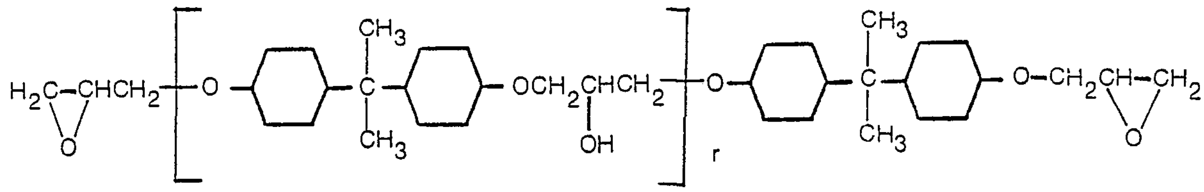

wherein r is 0—2.2 or mixtures of said diglycidyl ethers.

In addition to the above noted components, accelerators and solvents may be optionally present. The accelerators function to speed the curing operation in the preparation of thin films, i.e. films of a maximum of 8 mil thickness per coat. Typical accelerators include aromatic acids such as benzoic and salicyclic acids; phenols such as phenol, p-tert.butyl phenol, bisphenol A and nonyl phenol; and aromatic alcohols such as benzyl alcohol.

The solvents modify the curable blends, particularly serving to control viscosity. Applicable solvents include ether alcohols such as ethylene glycol monomethylether, monoethylether, monobutylether, and the diethylene glycol analogs; aromatic hydrocarbons such as xylene and toluene.

The new adducts of this invention are generally prepared by charging the amine, and the solvent and accelerator if present, to the reaction vèssel and heating to a temperature of 50°—80°C. The polyepoxide is then added over a period of from 60 to 180 minutes, allowing a maximum exotherm up to about 125°C. At the conclusion of the polyepoxide feed, the reaction mixture is generally heated to 50° to 120°C to ensure completeness of the reaction. The progress of the reaction can be followed by titration of the epoxide groups using samples taken during the reaction, completion being indicated by the absence of epoxy groups.

With regard to relative concentrations of the various components, the following tabulated figures apply. In all instances, the amine is used in excess amounts.

(1) Two component reaction products; Component (a) is utilized in amounts ranging from about 6—20 weight equivalents of a per weight equivalent of component (i) or component (ii) and preferably 8—10 equivalents of (a) per equivalent of (i) or (ii).

(2) Three component reaction products: Component (i) or component (ii) is utilized in amounts ranging from about 1—3 weight equivalents per weight equivalent of component (c), (d), or mixture thereof, and preferably 1 equivalent of (i) or (ii) per equivalent of (c), (d) or mixture thereof. The ratio of (a) to the total epoxy mixture ranges from 6—20 weight equivalents of (a) per weight equivalent of the epoxide resin mixture, and preferably 8—10 weight equivalents of (a) per weight equivalent of the epoxide resin mixture.

The accelerator and solvent may each be present in concentrations ranging from about 0—40% by weight of the total reaction product.

The adducts of the instant invention are liquids at room temperature with medium viscosity. They are yellow in color.

As previously noted, the adducts of this invention are useful as curing agents for a wide variety of epoxy resins in both room temperature and heat cured applications. When combined with di- and polyepoxides, at generally stoichiometric amounts, and cured at room temperature or with mild heat (about 65°C), a network of high crosslink density occurs. Accordingly, the expression "cure" as used herein, denotes the conversion of the above adducts and epoxide material into insoluble and infusible crosslinked products, with simultaneous shaping to give shaped articles such as castings pressings or laminates, or to give two-dimensional structures such as coatings, enamels or adhesive bonds.

The adducts prepared according to the invention and admixed with other polyepoxide compounds can furthermore be mixed, at any stage before cure, with usual modifiers such as extenders, fillers and reinforcing agents, pigments, dyestuffs, organic solvents and plasticizers. As extenders, reinforcing agents, fillers and pigments which can be employed in the curable mixtures according to the invention there may, for example, be mentioned: coal tar, bitumen, glass fibers, boron fibers, carbon fibers, cellulose, polyethylene powder, polypropylene powder, mica, asbestos, quartz powder, gypsum, antimony trioxide, bentones, silica aerogel ("Aerosil"), lithopone, barite, titanium dioxide, carbon black, graphite, iron oxide, or metal powders such as aluminum powder or iron powder. It is also possible to add other usual additives, for example, flame-proofing agents, agents for conferring thixotropy, flow control agents such as silicones,

cellulose acetate butyrate, polyvinyl butyral, waxes and stearates (which are in part also used as mold release agents) to the curable mixtures.

The curable mixtures can be manufactured in the usual manner with the aid of known mixing equipment (stirrers, kneaders or rollers).

The curable epoxide resin mixtures are especially useful in the fields of surface protection, the electrical industry, laminating processes and the building industry. They can be used in a formulation which is in each case suited to the particular end use, in the unfilled or filled state, optionally in the form of solutions or emulsions, as paints, enamels, sintering powders, compression molding compositions, dipping resins, casting resins, injection molding formulations, impregnating resins and adhesives, as tooling resins, laminating resins, sealing and filling compositions, floor covering compositions and binders for mineral aggregates.

Of primary interest is their utility as protective coatings. The coating composition may be applied to any suitable substrate by any suitable means such as spraying, dipping, brushing, painting or roller coating. After the desired film thickness is applied, curing proceeds either at room temperature or at elevated temperatures. The resultant cured coatings are void-free and possess excellent physical properties and chemical resistance. The distinct advantage of these systems is exhibited in the latter area where excellent resistance to the adverse effects of acids, solvents, alcohols and alkaline materials are noted. Of particular value is the unexpected resistance of these materials to the adverse effects of solvents. Such resistance is essential when the epoxy coatings are utilized as tank linings or flooring materials.

The following examples will further illustrate the embodiments of the instant invention. In these examples, all parts are given by weight unless otherwise noted.

## Example 1

A three-neck round bottom flask equipped with a mechanical stirrer, thermometer, nitrogen inlet tube and dropping funnel was charged with 164.8 g (8 eq.) of diethylene triamine (DETA). The flask contents were stirred and heated under a nitrogen blanket to 70°C whereupon 106.3 g (0.5 eq.) of epoxy cresol novolac resin of functionality of 2.7 (ECN 1235 from CIBA-GEIGY Corp.), 50% in xylene, and 94.3 g (0.5 eq.) of diglycidylether of bisphenol A (ARALDITE(R) 6010 from CIBA-GEIGY Corp.) were added portionwise to the reaction mixture. After the resin addition was complete, the temperature was raised to 120°C. Bisphenol A (128.7 g) was charged at 120°C and the mixture was held at that temperature for one hour. This adduct was characterized by a Gardner-Holdt viscosity at 25°C of X—Y, an $H^+$ equivalent of 105 and a solids content of 67.4% after dilution with cellosolve (132.6 g). It was designated composition A.

## Example 2

A three-neck round bottom flask equipped with mechanical stirrer, thermometer, nitrogen inlet tube and dropping funnel was charged with 420 g (15.0 eq.) of 1,2-diaminocyclohexane (DAC) and the flask contents were stirred and heated under a nitrogen blanket to 70°C. The formation of the polyamine adduct was accomplished by feeding 212.7 g (1.0 eq.) of epoxide resin ECN 1235 dissolved in an equal weight of xylene, into the polyamine via a dropping funnel, allowing the exothermic reaction to proceed to a maximum of 125°C. The reaction mixture was then heated at the conclusion of the feed at about 80°C for 2 hours to complete the reaction.

The polyamine adduct was characterized by a Gardner-Holdt viscosity at 25°C of X, an $H^+$ equivalent of 60 and a solids content of 74.8%. This material was designated composition B.

Following the procedure above, other polyamine adducts were prepared from DAC and ECN 1235 in the following proportions:

| Composition | DAC (g) | ECN (g) | Eq.Ratio | Gardner-Holdt Viscosity (25°C) | % Wt. Solids | $H^+$ Equiv-alent |
|---|---|---|---|---|---|---|
| C | 280 | 212.7 | 10:1 | J | 69.8 | 78 |
| D | 224 | 212.7 | 8:1 | $Z_5$—$Z_6$ | 67.2 | 93 |
| E | 168 | 212.7 | 6:1 | Y—Z | 64.2 | 119 |

## Example 3

A polyamine adduct was prepared with 318 g (6.0 eq.) of bis(p-aminocyclohexyl)methane and 212.7 g (1.0 eq.) of polyepoxide resin ECN 1235 dissolved in an equal weight of xylene using the procedure described in Example 2. The polyamine adduct was characterized by a Gardner-Holdt viscosity at 25°C of $Z_2$—$Z_3$, an $H^+$ equivalent of 149, and a solids content of 71.4%. The adduct was designated composition F.

Example 4

A three-neck round bottom flask equipped with mechanical stirrer, thermometer, nitrogen inlet tube and dropping funnel was charged with 280 g (10.0 eq.) of DAC and the flask contents were stirred at ambient temperature under a nitrogen blanket. The formation of the polyamine adduct was accomplished by feeding 108.6 g (1.0 eq.) of triglycidyl p-aminophenol (TAP) dissolved in 27.15 g of cellosolve, into the polyamine in a dropwise manner from a dropping funnel, allowing the exothermic reaction to proceed to a maximum of 50°C. The reaction mixture was then heated for 2 hours at 50°C to complete the reaction. Upon cooling, benzyl alcohol (166.3 g) was added.

The polyamine adduct was characterized by a Gardner-Holdt viscosity at 25°C of M, an $H^+$ equivalent of 65, and a solids content of 66.8%. This adduct was designated composition G.

Example 5

A three-neck round bottom flask equipped with mechanical stirrer, thermometer, nitrogen inlet tube and dropping funnel was charged with 280 g (10.0 eq.) of DAC and the flask contents were stirred at ambient temperature under a nitrogen blanket. The formation of the polyamine adduct was accomplished by feeding 108.6 g (1.0 eq.) of epoxy resin, TAP dissolved in 27.15 g of benzyl alcohol, into the polyamine in a dropwise manner from a dropping funnel, allowing the exothermic reaction to proceed to a maximum of 50°C. The reaction mixture was then heated for 2 hours at 50°C to complete the reaction. A Gardner-Holdt viscosity at 25°C of $Z_2$, an $H^+$ equivalent of 46 and a solids content of 93.4% were obtained. The adduct was designated composition H.

Example 6

In a procedure similar to Example 5, the following polyamine adducts were prepared by varying the equivalent ratio of DAC.

| Composition | DAC (g) | TAP (g) | Eq.Ratio | Gardner-Holdt Viscosity (25°C) | % Wt. Solids | $H^+$ Equivalent |
|---|---|---|---|---|---|---|
| I | 196 | 108.6 | 7:1 | N—O | 91.8 | 56 |
| J | 168 | 108.6 | 6:1 | T—U | 91.1 | 61 |

Example 7

Following the procedures of Examples 5 and 6, additional polyamine adducts were prepared by substituting meta-xylylenediamine (MXDA) and isophorone diamine (IPD) for part or all of the DAC.

| Composition | DAC (g) | MXDA (g) | IPD (g) | Eq.Ratio | Gardner-Holdt Viscosity (25°C) | % Wt. Solids | $H^+$ Equivalent |
|---|---|---|---|---|---|---|---|
| K | — | 272 | — | 8:1 | $Z_3$ | 93.3 | 58 |
| L | — | 204 | — | 6:1 | $Z_2$—$Z_3$ | 92.0 | 68 |
| M | — | — | 340.8 | 8:1 | $Z_7$ | 94.3 | 68 |
| N | 168 | 136 | — | 10:1 | Z—$Z_1$ | 93.8 | 49 |
| O | 170.4 | — | 168 | 10:1 | $Z_3$—$Z_4$ | 92.6 | 41 |

Example 8

A three-neck round bottom flask equipped with a mechanical stirrer, thermometer, nitrogen inlet tube and dropping funnel was charged with 224 g (8.0 eq.) of DAC, 194.5 g of benzyl alcohol and 9.8 g of salicyclic acid. The flask contents were heated under a nitrogen blanket to 80°C whereupon 106.3 g (0.5 eq.) of epoxy resin ECN 1235 and 94.3 g (0.5 eq.) of ARALDITE(R) 6010 were added portionwise from the dropping funnel, allowing the reaction temperature to reach 90—95°C. At the completion of the feed, the reaction mixture was held at 95°C for 1.5 hours to complete the reaction.

The adduct was characterized by a Gardner-Holdt viscosity at 25°C of $Z_3$, an $H^+$ equivalent of 90 and a

solids content of 69.1%. The adduct was designated composition P.

Example 9

The following adduct was prepared according to Example 8 using instead of 94.3 g of ARALDITE[R] 6010 now 260.4 g (0.5 eq.) of a bisphenol A-diglycidylether having an epoxy equivalent weight of 1.9—2.0 eq./kg.

The polyamine adduct exhibited a Gardner-Holdt viscosity at 25°C of Y, an $H^+$ equivalent of 122 and a solids content of 69.4%. The adduct was designated composition Q.

Example 10

A three-neck round bottom flask equipped with a mechanical stirrer, thermometer, nitrogen inlet tube and dropping funnel was charged with 280 g (10.0 eq.) of DAC. The flask contents were stirred and heated under a nitrogen blanket to 55°C whereupon 106.3 g (0.5 eq.) of ECN 1235, dissolved in 45.5 g of xylene, and 113.5 g (0.5 eq.) of the diglycidyl ether of 2,2-bis(4-cyclohexanol)propane having an epoxy equivalent weight of about 227 were added dropwise to the reaction mixture, allowing the exothermic reaction to proceed to a maximum of 80°C. At the conclusion of the feed, the reactor contents were held without external heat until the exotherm subsided.

The polyamine adduct was characterized by an $H^+$ equivalent of 61 and a solids content of 91.7%. The adduct was designated composition R.

Example 11

A three-neck round bottom flask equipped with a mechanical stirrer, reflux condenser, thermometer, nitrogen inlet tube and dropping funnel was charged with 451 g of benzyl alcohol, 594.0 g (12.0 eq.) of bis(p-aminophenyl)methane and 21.3 g of salicyclic acid with stirring. The flask contents were heated under a nitrogen blanket to 80°C for one-half hour whereupon 106.3 g (0.5 eq.) of epoxy resin ECN 1235 and 94.3 g (0.5 eq.) of ARALDITE[R] 6010 were added portionwise, allowing a maximum exotherm of 90°C. At the conclusion of the feed, the reaction contents were heated to 100°C for one-half hour to complete the reaction.

The polyamine adduct, designated composition S, was characterized by a Gardner color of 9, an $H^-$ equivalent of 115 and a solids content of 64.4%.

APPLICATION AND TESTING

Chemical resistance testing was conducted according to CIBA-GEIGY Test Method No. 230, said procedure being based on ASTM methods D 1308—57 and D 1540—61. The "Chemical Tester Procedure" was followed using glass test cells. All test panels were prepared at a film thickness of 12—16 mils on sandblasted, hot rolled steel substrate. All films were clear and unfilled. The testing was conducted at 23°C.

In order to demonstrate the superiority of the products of this invention, extremely aggressive reagents were chosen for chemical testing. These reagents included HCl (36%), acetic acid (10%), ammonium hydroxide (30%), cellosolve, acetone, methyl ethyl ketone (MEK), butyl acetate, methylene chloride, trichloroethylene, ethanol (95%), and methanol. Failure was defined as the appearance of blisters, delamination, softening to substrate or total destruction of the coating.

CHEMICAL RESISTANCE

| Hardener Adduct | A* | P* | G* | G** | J** | M** | N** |
|---|---|---|---|---|---|---|---|
| (parts per 100 parts of resin)*** | 56 | 48 | 35 | 35 | 32 | 36 | 26 |
| | (days to failure) | | | | | | |
| HCl (36%) | >14 | >14 | 21 | 28 | 15 | >47 | 21 |
| Acetic Acid (10%) | >14 | >14 | 6 | 53 | <3 | 14 | 21 |
| $NH_4OH$ (30%) | >14 | >14 | >180 | >180 | >47 | >47 | >47 |
| Cellosolve | >14 | >14 | >180 | >180 | >47 | >47 | >47 |
| Acetone | <3 | >14 | >180 | >180 | >47 | >47 | >47 |
| MEK | >14 | 7 | >180 | 65 | >47 | >47 | >47 |
| Butyl Acetate | >14 | >14 | >180 | >180 | >47 | >47 | >47 |
| Methylene Chloride | <3 | <3 | <3 | <3 | <3 | >47 | 28 |
| Trichloroethylene | >14 | >14 | 87 | 163 | >47 | >47 | >47 |
| Ethanol (95%) | >14 | >14 | >180 | >180 | >47 | >47 | >47 |
| Methanol | 10 | >14 | >180 | >180 | >47 | >47 | 21 |

* Cure Conditions: 10 days at 23°C before immersion
** Cure Conditions: 10 hours at 65°C before immersion
*** ARALDITE(R) 6010 was used throughout as the resin component

**Claims**

1. A curing agent for epoxy resins comprising the adduct, free of epoxy groups, obtained from the reaction of
(a) an amine,
(b) a polyepoxide resin having a functionality greater than two and being either (i) a polyepoxide corresponding to the formula

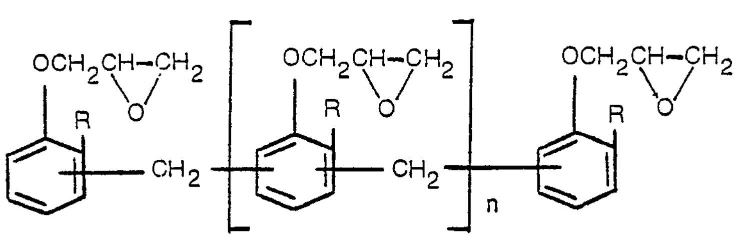

wherein R is $CH_3$ and n is 0.2—3.4, or
(ii) triglycidyl-p-aminophenol
and, optionally, an accelerator for said curing operation and a solvent for said curing agent, said amine being present in weight equivalent excess relative to said polyepoxide resin.

2. The adduct of claim 1, wherein said polyepoxide resin comprises a blend of either component (i) or component (ii) with a diglycidyl ether of bisphenol A (c) corresponding to the formula

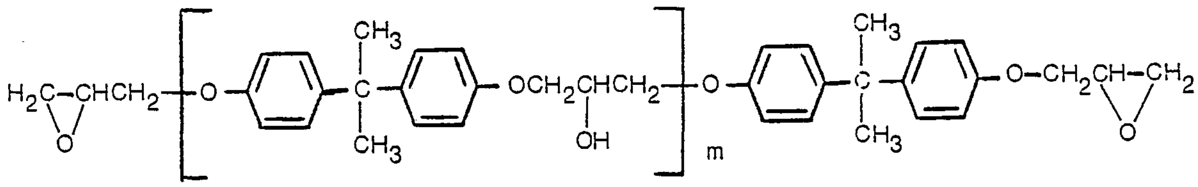

wherein m is 0—2.2, a diglycidyl ether of hydrogenated bisphenol A (d) corresponding to the formula

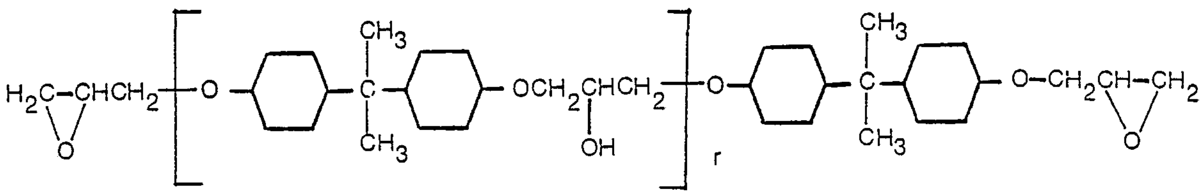

wherein r is 0—2.2 or mixtures of said diglycidyl ethers.

3. The adduct of claims 1 or 2, wherein said amine is an aliphatic or cycloaliphatic amine.

4. The adduct of claim 3, where said amine is selected from the group consisting of diethylenetriamine, triethylenetetramine, tetraethylenepentamine, 1,2-diaminocyclohexane, bis(p-aminocyclohexyl)methane, m-xylylenediamine, isophorone diamine, 1,4-bis(aminomethyl)cyclohexane, N-aminoethyl-piperazine, 1,3-bis(aminomethyl)cyclohexane and bis(p-aminophenyl)methane.

5. The adduct of claim 1, wherein said amine is present in a concentration ranging from about 6—20 weight equivalents per weight equivalent of said polyepoxide resin.

6. The adduct of claim 2, wherein in said blend said component (i) or component (ii) is present in a concentration ranging from about 1—3 weight equivalents per weight equivalent of said diglycidyl ether.

7. The adduct of claims 2 or 6, wherein said amine is present in a concentration ranging from about 6—20 weight equivalents per weight equivalent of said blend.

8. The adduct of claims 1 or 2, wherein said accelerator is present in a concentration of from 0—40% by weight of said adduct and is selected from the group consisting of aromatic acids, phenols and aromatic alcohols.

9. The adduct of claims 1 or 2 wherein said solvent is present in a concentration of from 0—40% by weight of said adduct and is selected from the group consisting of ether alcohols and aromatic hydrocarbons.

10. A curable mixture comprising (A) a polyepoxide compound and (B) an adduct according to claims 1 or 2.

**Patentansprüche**

1. Ein Härtungsmittel für Epoxidharze, enthaltend ein epoxidgruppenfreies Addukt, erhalten durch Umsetzung

a) eines Amins mit

b) einem Polyepoxidharz mit einer Funktionalität von grösser als zwei und welches entweder (i) ein Polyepoxidharz der folgenden Formel

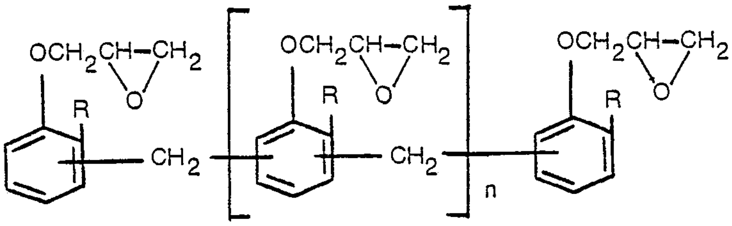

worin R Methyl und n 0,2—3,4 bedeuten, oder (ii) Triglycidyl-p-aminophenol ist, und gegebenenfalls einen Härtungsbeschleuniger sowie ein Lösungsmittel für das Härtungsmittel, wobei das Amin (a) im gewichtsäquivalenten Ueberschuss, bezogen auf das Epoxidharz (b), vorhanden ist.

2. Das Addukt gemäss Anspruch 1, worin das Epoxidharz ein Gemisch enthält entweder aus Komponente (i) oder aus Komponente (ii) mit einem Bisphenol A-diglycidyläther (c) der Formel

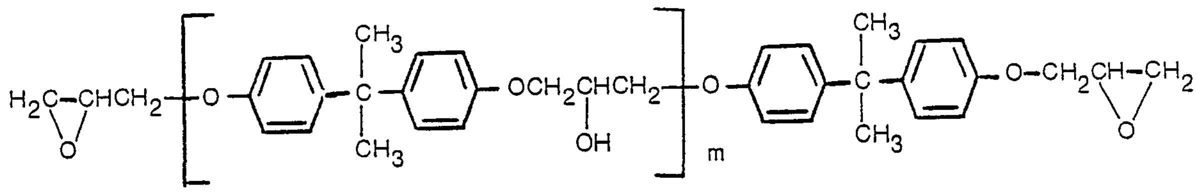

worin m für null bis 2,2 steht, einem hydrierten Bisphenol A-diglycidyläther der Formel

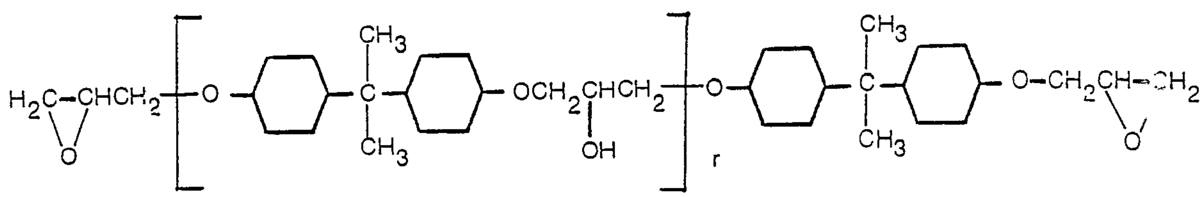

worin r für null bis 2,2 steht, oder einem Gemisch dieser Glycidyläther.

3. Das Addukt gemäss Anspruch 1 oder 2, worin das Amin ein aliphatisches oder cycloaliphatisches Amin ist.

4. Das Addukt gemäss Anspruch 3, worin das Amin ausgewählt ist aus Diäthylentriamin, Triäthylentetramin, Tetraäthylenpentamin, 1,2-Diaminocyclohexan, Bis(p-aminocyclohexyl)methan, m-Xylylendiamin, Isophorondiamin, 1,4-Bis(aminomethyl)cyclohexan, N-Aminoäthyl-piperazin, 1,3-Bis(aminomethyl)cyclohexan und Bis(p-aminophenyl)methan.

5. Das Addukt gemäss Anspruch 1, worin das Amin (a) in einer Konzentration von 6—20 Gewichtsäquivalenten pro 1 Gewichtsäquivalent des Epoxidharzes vorhanden ist.

6. Das Addukt gemäss Anspruch 2, worin im Epoxidgemisch die Komponente (i) oder (ii) in einer Konzentration von 1—3 Gewichtsäquivalenten pro 1 Gewichtsäquivalent des Diglycidyläthers vorhanden ist.

7. Das Addukt gemäss Anspruch 2 oder 6, worin das Amin (a) in einer Konzentration von etwa 6—20 Gewichtsäquivalenten pro 1 Gewichtsäquivalent des Epoxidharzgemisches vorhanden ist.

8. Das Addukt gemäss Anspruch 1 oder 2, worin der Härtungsbeschleuniger in einer Konzentration von 0—40 Gewichts-%, bezogen auf das Addukt, vorhanden ist und aus einer aromatischen Säure, einem Phenol oder einem aromatischen Alkohol besteht.

9. Das Addukt gemäss Anspruch 1 oder 2, worin das Lösungsmittel in einer Konzentration von 0—40 Gewichts-%, bezogen auf das Addukt, vorhanden ist und aus einem Aetheralkohol oder einem aromatischen Kohlenwasserstoff besteht.

10. Ein härtbares Gemisch, enthaltend (A) eine Polyepoxidverbindung und (B) ein Addukt gemäss Anspruch 1 oder 2.

**Revendications**

1. Un agent durcisseur pour résines époxydes qui comprend le produit d'addition, sans groupes époxy, résultant de la réaction de

(a) une amine avec

(b) une résine polyépoxyde ayant un degré de fonctionnalité supérieur à deux et qui est soit (1) un polyépoxyde de formule

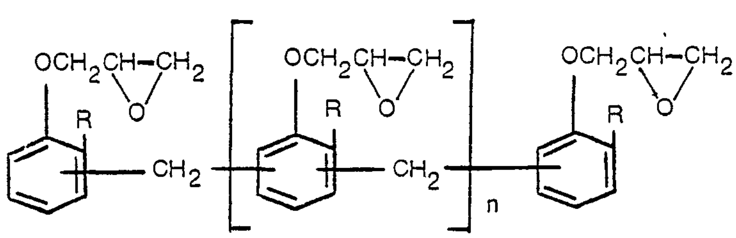

R désignant le groupe $CH_3$ et n un nombre de 0,2 à 3,4, soit (2) le triglycidyl-p-amino-phénol, et facultativementun accélérateur de durcissement et un solvant de l'agent durcisseur, l'amine se trouvant en excès d'équivalents pondéraux par rapport à la résine époxyde.

2. Produit d'addition selon la revendication 1 dans lequel la résine de polyépoxyde comprend un mélange du composant (1) ou du composant (2) avec un éther diglycydylique du bisphénol A (c) de formule

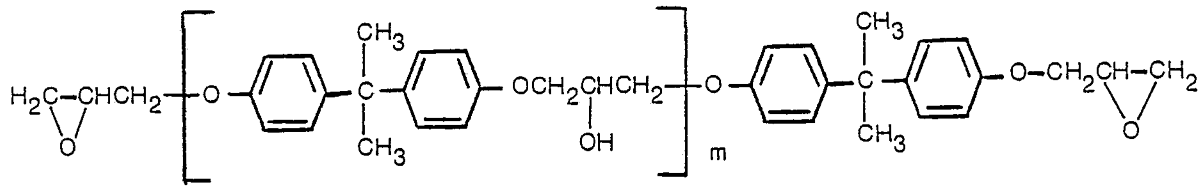

m étant un nombre de 0 à 2,2, un éther diglycidylique de bisphénol A hydrogéné (d) de formule

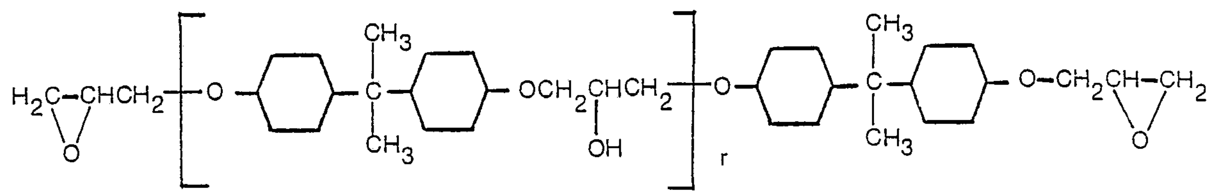

r étant un nombre de 0 à 2,2, ou avec un mélange de ces éthers diglycidyliques.

3. Produit d'addition selon la revendication 1 ou 2, dans lequel l'amine est une amine aliphatique ou cycloaliphatique.

4. Produit d'addition selon la revendication 3 dans lequel l'amine est choisie parmi la diéthylène-triamine, la triéthylène-tétramine, la tétraéthylènepentamine, le 1,2-diaminocyclohexane, le bis(p-amino-cyclohexyl)méthane, la m-xylène-diamine, l'isophorone-diamine, le 1,4-bis(amino-méthyl)cyclohexane, la N-aminoéthylpipérazine, le 1,3-bis(aminométhyl)cyclohexane et le bis-(p-aminophényl)méthane.

5. Produit d'addition selon la revendication 1, dans lequel la proportion de l'amine est d'environ 6 à 20 équivalents en poids par équivalent de résine de polyépoxyde.

6. Produit d'addition selon la revendication 2, dans lequel, dans le mélange, la proportion du composant (1) ou du composant (2) est d'environ 1 à 3 équivalents en poids par équivalent de l'éther diglycidylique.

7. Produit d'addition selon la revendication 2 ou 6, dans lequel la proportion de l'amine est de 6 à 20 équivalents en poids par équivalent du mélange.

8. Produit d'addition selon la revendication 1 ou 2, dans lequel l'accélérateur est à une concentration de 0 à 40% du poids du produit d'addition, et il est choisi parmi des acides aromatiques, des phénols et des alcools aromatiques.

9. Produit d'addition selon la revendication 1 ou 2, dans lequel le solvant est à une concentration de 0 à 40% en poids du produit d'addition, et il est choisi parmi des éthers-alcools et des hydrocarbures aromatiques.

10. Un mélange durcissable comprenant (A) un composé polyépoxydique et (B) un produit d'addition selon la revendication 1 ou 2.